# EUROPEAN PATENT SPECIFICATION

(11) **EP 0 316 285 B1**
(45) Date of publication and mention of the grant of the patent: **10.02.1993**
(21) Application number: 88830457.3
(22) Date of filing: 28.10.1988
(51) Int. Cl.: B60G 3/26, B60G 7/02

(54) **Improvements to McPherson-type suspensions for motor vehicles**
McPherson-Radaufhängungen für Kraftfahrzeuge
Suspensions du type McPherson pour des véhicules automobiles

(30) Priority: 09.11.1987 IT 6795287
(43) Date of publication of application: 17.05.1989
(73) Proprietor: FIAT AUTO S.p.A., 10135 Torino (IT)
(72) Inventor: Titolo, Andrea, I-10126 Torino (IT); Gandiglio, Romolo, I-14019 Villanova d'Asti (Asti) (IT)
(74) Representative: Saconney, Piero

(56) References cited:
- EP-A- 0 158 279
- EP-A- 0 278 095
- GB-A- 2 135 945
- US-A- 2 866 651
- PATENT ABSTRACTS OF JAPAN, vol. 7, no. 237 (M-250)[1382], 21st October 1983, page 151 M 250; & JP-A-58 126 206 (NISSAN JIDOSHA K.K.) 27-07-1983

## Description

The present invention relates to motor vehicle suspensions of the McPherson type, as set forth in the pre-characterizing portion of Claim 1. A suspension of this type is shown in GB-A-2 135 945. The object of the present invention is to produce an improved McPherson-type suspension which is able to satisfy in the optimum manner the requirements of vehicle stability when travelling and of passenger comfort.

The main characteristic of the suspension according to the invention is set forth in the characterizing portion of Claim 1. The pin-slot coupling is designed so that the variation in length which occurs in the arm during movements of the suspension causes a movement of the wheel support which is optimal for the best performance of the suspension. For example, it may be arranged so that the variation in length of the arm is such as to reduce roll on bends, increasing the road-holding, as will be described in greater detail below.

Preferably, the pin of the pin-slot coupling is carried by the end of the second element of the arm, while the slot is formed in the support fixed to the structure of the motor vehicle.

Furthermore, in this embodiment, two variable-length arms are provided which are parallel to each other and are articulated at one end to the structure of the motor vehicle, about the same axis, and at the other end to the wheel support.

In a possible variant, which relates to the application of the invention to a rear suspension, the pin-slot couplings are different for the two arms of the pair, whereby a predetermined steering of the wheel occurs as a result of movement of the suspension, so as to improve the behaviour of the motor vehicle on bends. A variation in the convergence of the rear wheels may also be obtained, for greater stability on bends.

Further characteristics and advantages of the invention will become clear from the description which follows with reference to the appended drawings, provided purely by way of non-limiting example, in which:
Figure 1 is a partial and schematic perspective view of a suspension according to the present invention,
Figure 2 is a section taken on the line II-II of Figure 1, on an enlarged scale, and
Figure 3 is a section taken on the line III-III of Figure 3.

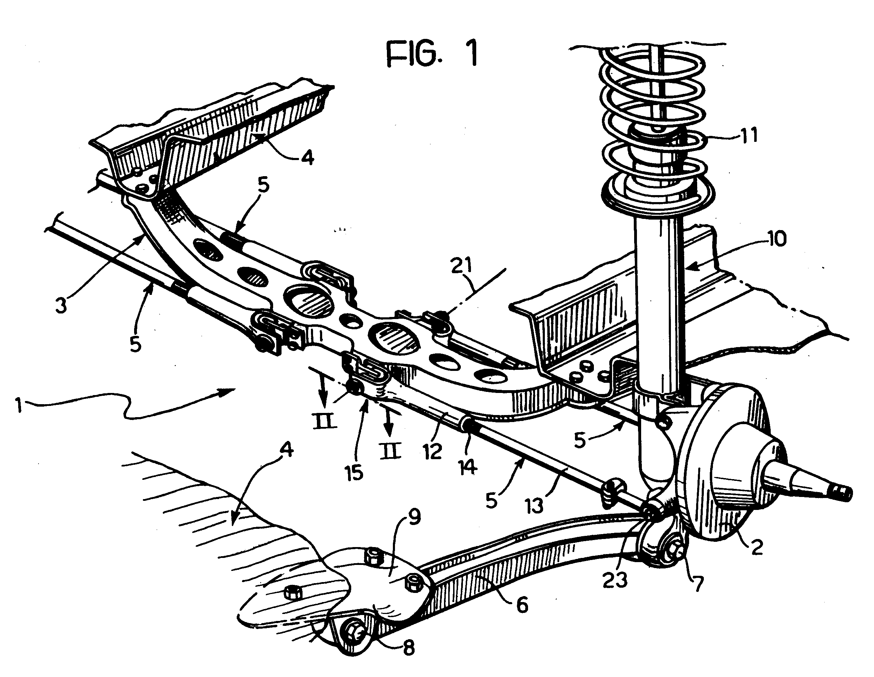

Figure 1 shows, by way of example, a McPherson-type rear suspension 1 for a motor car with front-wheel drive. In this suspension, the support 2 of each rear wheel of the motor vehicle (only one of these supports is visible in the drawing) is connected to a sheet-metal cross member 3, whose ends are bolted to the structure 4 of the motor vehicle, by means of a pair of transverse arms 5 as well as by means of an inclined auxiliary arm 6. The arm 6 is articulated at 7 to an appendage of the wheel support 2 and at 8 to a bracket 9 bolted to the structure 4 of the motor vehicle. The support 2 is also fixed to a shock-absorber 10 (provided with a helical spring 11) whose upper end (not visible in Figure 1) is pivotably connected to the structure of the vehicle.

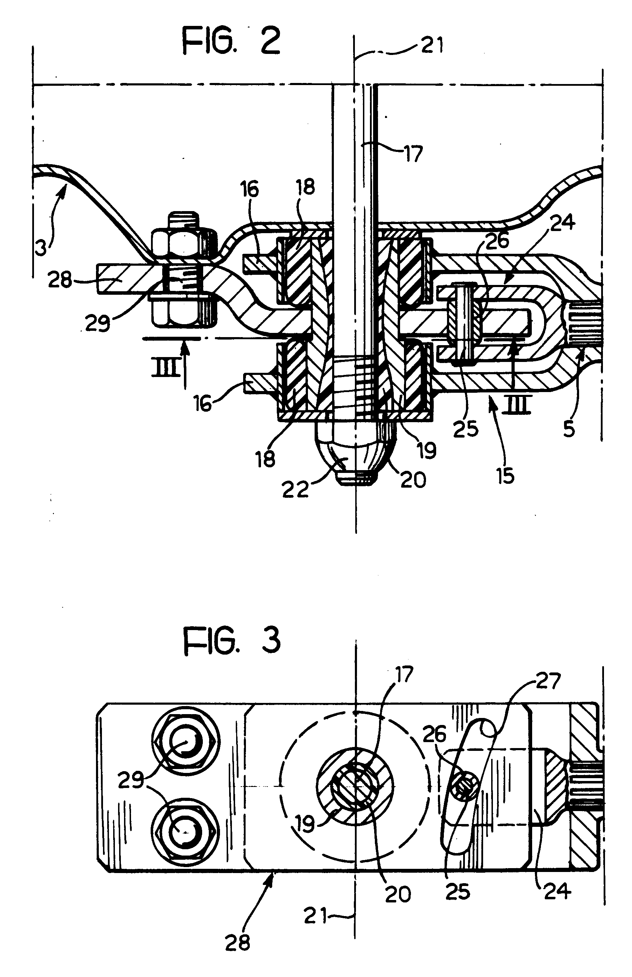

According to the invention, each of the arms 5 is constituted by a first element 12 and a second element 13 slidably mounted one inside the other by means of a splined coupling 14. The element 12 has a forked end 15 with two prongs 16 (see Figure 2) which are rotatably mounted on a pin 17 with the interposition of bushes 18, 19, 20. The forked ends 15 of the two arms 5 associated with each wheel are mounted on the same pin 17, whose axis is indicated 21. These ends are also held on the pin 17 axially by means of a nut 22 screwed onto a threaded end portion of the pin 17.

The second element 13 of each arm 5 has an end 23 which is articulated to the wheel support 2, for example, by means of a ball joint, and an opposite forked end 24. The two prongs of the forked end 24 support a pin 25 provided with a bush 26. The bush 26 (see Figs. 2, 3) is slidably engaged in a slot 27 formed in a bracket 28 fixed to the cross member 3 by means of bolts 29.

The slot 27 is formed in such a way that it causes a predetermined displacement of the second element 13 relative to the first element 12 as a result of pivoting of the arm 5 about the axis 21.

At the design stage, therefore, the slot 27 can be selected so as to obtain a variation in the length of each arm 5 which is optimal for the best behaviour of the suspension.

For example, it is possible to arrange that the arms 5 are extended when the wheel is displaced upwardly from its neutral position, and that the arms 5 are contracted when the wheel is displaced downwardly from the neutral position. The whole may be arranged so that movement of the wheel corresponds to rotation about an axis which is parallel to and spaced upwardly from the axis 21. This causes the centre of rolling of the suspension to be raised, which is beneficial for the stability of the motor vehicle on bends. The behaviour of the suspension may, of course, be influenced in any other desired manner. For example, in the case of a rear suspension, it may be arranged that the variation in length of the two arms 5 associated with each wheel is different, in order to obtain controlled steering of the wheel during movements of the suspension, so as to make it behave more correctly on bends.

Naturally, the principle of the invention remaining the same, the details of construction and forms of embodiment may be varied widely with respect to those described and illustrated purely by way of example, without thereby departing from the scope of the present invention as defined in the appended claims. For example, the cam means used to cause the variation in the length of the arm 5 could have a different structure from that illustrated.

## Claims

1. A McPherson-type suspension for motor vehicles, wherein the support (2) for each wheel is connected to the structure of the motor vehicle by means of at least one variable-length arm (5) having its ends (15, 23) articulated respectively to the structure of the motor vehicle and to the wheel support (2), and in that cam means (26, 27) are provided in correspondence with one of these articulations, characterised in that the variable-length arm (5) comprises a first and a second element (13, 12) slidably mounted relative to one another, said first and second elements being articulated to the vehicle structure and to the wheel support (2) respectively, and in that the end (24) of the second element (13) opposite that articulated to the wheel support (2) is guided by means of a pin-slot coupling (26, 27) in a support (28) fixed to the structure of the motor vehicle, thereby causing a predetermined variation in the length of the arm (5) with changes in its position.

2. A suspension according to Claim 1, characterised in that the pin of the pin-slot coupling is carried by the end (24) of the second element (13), and in that the slot (27) is formed in the support (28) fixed to the body of the motor vehicle.

3. A suspension according to Claim 1, characterised in that the two elements (12, 13) of each arm (5) are mounted for sliding relative to one another by means of a splined coupling (14).

4. A suspension according to Claim 2, characterised in that two variable-length arms (5) are associated with each wheel support.

5. A suspension according to Claim 4, characterised in that the two arms (5) associated with each wheel are articulated to the structure of the motor vehicle about the same axis (21).

## Patentansprüche

1. McPherson-Aufhängung für ein Kraftfahrzeug, bei welcher jeder Radträger (2) mit dem Aufbau des Kraftfahrzeugs mittels wenigstens eines längenveränderlichen Arms (5) verbunden ist, dessen Enden (15, 23) jeweils an dem Aufbau des Kraftfahrzeugs und dem Radträger (2) angelenkt sind, und bei welcher nockenartige Führungsmittel (26, 27) in Zuordnung zu einer dieser Anlenkungen vorgesehen sind, **dadurch gekennzeichnet,** daß der längenveränderliche Arm (5) ein erstes und ein zweites Element (13, 12) umfaßt, welche relativ zueinander verschiebbar angebracht sind, wobei die ersten und zweiten Elemente an dem Kraftfahrzeugaufbau bzw. an dem Radträger (2) angelenkt sind, und daß das dem an dem Radträger (2) angelenkten Ende entgegengesetzte Ende des zweiten Elements (13) mittels einer Stift-Schlitz-Verbindung (26, 27) in einem an dem Aufbau des Kraftfahrzeugs befestigten Träger (28) geführt ist, so daß eine vorbestimmte Veränderung der Länge des Arms (5) bei einer Veränderung seiner Lage verursacht wird.

2. Aufhängung nach Anspruch 1, **dadurch gekennzeichnet,** daß der Stift der Stift-Schlitz-Verbindung durch das Ende (24) des zweiten Elements (13) getragen ist, und daß der Schlitz (27) in dem an dem Rumpf des Kraftfahrzeugs befestigten Träger (28) gebildet ist.

3. Aufhängung nach Anspruch 1, **dadurch gekennzeichnet,** daß die beiden Elemente (12, 13) von jedem Arm (5) zur gegenseitigen Verschiebung mittels einer Gleitzahnkupplung (14) zusammengesetzt sind.

4. Aufhängung nach Anspruch 2, **dadurch gekennzeichnet,** daß mit jedem Radträger zwei längenveränderliche Arme (5) verbunden sind.

5. Aufhängung nach Anspruch 4, **dadurch gekennzeichnet,** daß die beiden, jedem Rad zugehörigen Arme (5) an dem Aufbau des Kraftfahrzeugs um die gleiche Achse (21) angelenkt sind.

## Revendications

1. Suspension du type McPherson pour véhicules automobiles, dans laquelle le support (2) de chaque roue est relié à la structure du véhicule automobile à l'aide d'au moins un bras (5) de longueur variable dont les extrémités (15, 23) sont articulées respectivement à la structure du véhicule automobile et au support de roue (2), et en ce que des moyens du type came (26, 27) sont prévus au droit de l'une de ces articulations, caractérisée en ce que le bras (5) de longueur variable comprend un premier et un second éléments (13, 12) montés coulissants l'un par rapport à l'autre, lesdits premier et second éléments étant articulés respectivement à la structure du véhicule et au support de roue (2), et en ce que l'extrémité (24) du second élément (13) qui est à l'opposé de celle articulée au support de roue (2) est guidée au moyen d'une liaison à broche et fente (26, 27) dans un support (28) fixé à la structure du véhicule automobile, en provoquant ainsi une variation prédéterminée de la longueur du bras (5) avec les variations de sa position.

2. Suspension selon la revendication 1, caractérisée en ce que la broche de la liaison à broche et fente est portée par l'extrémité (24) du second élément (13) et en ce que la fente (27) est formée dans le support (28) fixé à la caisse du véhicule automobile.

3. Suspension selon la revendication 1, caractérisée en ce que les deux éléments (12, 13) de chaque bras (5) sont montés pour pouvoir coulisser l'un par rapport à l'autre au moyen d'un accouplement à cannelures (14).

4. Suspension selon la revendication 2, caractérisée en ce que deux bras (5) de longueur variable sont associés à chaque support de roue.

5. Suspension selon la revendication 4, caractérisée ce que les deux bras (5) associés à chaque roue sont articulés à la structure du véhicule automobile pour tourner autour du même axe (21).
